(19)

Europäisches
Patentamt
European
Patent Office
Office européen
des brevets

(11) **EP 2 947 881 A1**

(12) **EUROPEAN PATENT APPLICATION**

(43) Date of publication:
    **25.11.2015 Bulletin 2015/48**

(51) Int Cl.:
    *H04N 19/33* $^{(2014.01)}$

(21) Application number: **14305729.7**

(22) Date of filing: **20.05.2014**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(71) Applicant: **Thomson Licensing
    92130 Issy-les-Moulineaux (FR)**

(72) Inventors:
    • **Touze, David
      35576 CESSON SEVIGNE (FR)**

    • **Leleannec, Fabrice
      35576 CESSON SEVIGNE (FR)**
    • **Olivier, Yannick
      35576 CESSON SEVIGNE (FR)**
    • **Lasserre, Sebastien
      35576 CESSON SEVIGNE (FR)**

(74) Representative: **Huchet, Anne
    Technicolor
    1, rue Jeanne d'Arc
    92443 Issy-les-Moulineaux Cedex (FR)**

(54) **Method and device for scalable encoding of a high-dynamic range frame and/or decoding a bitstream**

(57)    The present disclosure generally relates to a method and device for encoding a frame, comprising a processor configured for:
- encoding (12) a backlight frame determined (11) from the frame to be encoded;
- obtaining (13) at least one component of a residual frame by dividing each component of the frame by a decoded version of the backlight frame;
- encoding (19) the residual frame;

the method is characterized in that the processor is further configured in order that the backlight frame is represented by a weighted linear combination of at least one set of 2D shape functions, the 2D shape functions of each set forming a partition of unity of a domain defined by the union of their supports.

The disclosure relates also to a method and device for decoding a bitstream representing a residual frame calculated by dividing a frame by a backlight frame.

**Fig. 1**

EP 2 947 881 A1

**Description**

**1. Field of disclosure.**

The present disclosure generally relates to frame/video encoding and decoding. In particular, the technical field of the present disclosure is related to encoding/decoding of a frame whose pixels values belong to a high-dynamic range.

**2. Technical background.**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Low-Dynamic-Range frames (LDR frames) are frames whose luminance values are represented with a limited number of bits (most often 8 or 10). This limited representation does not allow correct rendering of small signal variations, in particular in dark and bright luminance ranges. In high-dynamic range frames (HDR frames), the signal representation is extended in order to maintain a high accuracy of the signal over its entire range. In HDR frames, pixel values are usually represented in floating-point format (either 32-bit or 16-bit for each component, namely float or half-float), the most popular format being openEXR half-float format (16-bit per RGB component, i.e. 48 bits per pixel) or in integers with a long representation, typically at least 16 bits.

A typical approach for encoding an HDR frame is to reduce the dynamic range of the frame in order to encode the frame by means of a legacy encoding scheme (initially configured to encode LDR frames).

According to a well-known approach, a backlight frame is determined from the luminance component of the input HDR frame. A residual frame is then obtained by dividing the input HDR frame by the backlight frame and both the backlight frame and the residual frame are encoded by a legacy encoder such as H.264/AVC (("Advanced video coding for generic audiovisual Services", SERIES H: AUDIOVISUAL AND MULTIMEDIA SYSTEMS, Recommendation ITU-T H.264, Telecommunication Standardization Sector of ITU, January 2012).) or HEVC ("High Efficiency Video Coding", SERIES H: AUDIOVISUAL AND MULTIMEDIA SYSTEMS, Recommendation ITU-T H.265, Telecommunication Standardization Sector of ITU, April 2013).

The capability of compression depends strongly on the temporal correlation between frames and the spatial smoothness of each frame. Actually, video encoders use temporal and intra-frame prediction as a very efficient tool to compress video data.

The capability of providing automatically a viewable LDR frame from the encoded residual frame is a key advantage as it allows distributing the HDR frame (video) to customers equipped with standard LDR TV sets and reception device not dedicated to post-process both the backlight frame and the residual frame to decode an HDR frame (video).

Unfortunately, if one is not careful with the backlight frame building at the encoder side, this backlight frame may lack uniformity and this non uniformity creates some smooth gradient in the residual frame (LDR viewable frame). The human visual system is very sensitive to such artifacts. Thus, a dedicated backlight frame building capable of providing a uniform backlight frame is wishful.

**3. Summary of the disclosure.**

The disclosure sets out to remedy some of the drawbacks of the prior art with a method for encoding a frame comprising a processor configured for:

- encoding a backlight frame determined from the frame to be encoded;
- obtaining at least one component of a residual frame by dividing each component of the frame by a decoded version of the backlight frame;
- encoding the residual frame;

The method is characterized in that the processor is further configured in order that the backlight frame is represented by a weighted linear combination of at least one set of 2D shape functions, the 2D shape functions of each set forming a partition of unity of a domain defined by the union of their supports.

According to an embodiment, the 2D shape functions are defined according to constraints of smoothness on the boundaries of their supports.

According to an embodiment, the 2D shape functions of a set have the shape of a model symmetric function.

According to an embodiment, the 2D shape functions are defined over a regular grid.

According to an embodiment, the model symmetric function is the product of two separable 1 D polynomials.

According to an embodiment, the backlight frame is represented by a weighted linear combination of several sets of 2D shape functions, the 2D shape functions of each set forming a partition of unity of a domain defined by the union of their supports.

According to an embodiment, coefficients of the weighted linear combination and/or the 2D shape functions are encoded in a bitstream.

The disclosure further relates to a method for decoding a frame from at least one bitstream representing a backlight frame obtained from the frame and a residual frame calculated by dividing the frame by the backlight frame. The decoding method comprising a processor configured for:

- obtaining a decoded backlight frame by a at least partially decoding of a bitstream;
- obtaining a decoded residual frame by a at least partially decoding of a bitstream; and
- obtaining a decoded frame by multiplying the decoded residual frame by the decoded backlight frame;

the method is characterized in that the processor is further configured in order that the decoded backlight frame is represented by a weighted linear combination of at least one set of 2D shape functions, the 2D shape functions of each set forming a partition of unity of a domain defined by the union of their supports.

According to an embodiment, the backlight frame is represented by a weighted linear combination of several sets of 2D shape functions, the 2D shape functions of each set forming a partition of unity of a domain defined by the union of their supports.

According to an embodiment, the processor is further configured for obtaining coefficients of the weighted linear combination of 2D shape functions by a at least partially decoding of a bitstream and/or the 2D shape functions of a set of 2D shape functions by a at least partially decoding of a bitstream.

According to other of its aspects, the disclosure relates to an encoding and decoding device, a computer program product, a processor readable medium and non-transitory storage medium.

The specific nature of the disclosure as well as other objects, advantages, features and uses of the disclosure will become evident from the following description of a preferred embodiment taken in conjunction with the accompanying drawings.

## 4. List of figures.

The embodiments will be described with reference to the following figures:

- **Fig. 1** shows a block diagram of the steps of a method for encoding a frame I in accordance with an embodiment of the disclosure;
- **Fig. 2** shows an example of support for the 2D shape functions;
- **Fig. 3** show an example of the model symmetric function $\phi$ over a triangular meshing;
- **Fig. 4** shows an example of a representation using four sets of 2D shape functions defined over a rectangular grid;-
- **Fig. 5** shows a block diagram of a step of the method in accordance with an embodiment of the disclosure;
- **Fig. 6** shows a block diagram of a step of the method in accordance with an embodiment of the disclosure;
- **Fig. 7** shows a block diagram of a step of the method in accordance with an embodiment of the disclosure;
- **Fig. 8** shows a block diagram of the steps of a method, in accordance with an embodiment of the disclosure, for decoding a bitstream representing a residual frame calculated by dividing an frame by a backlight frame;
- **Fig. 9** shows an example of an architecture of a device in accordance with an embodiment of the disclosure; and
- **Fig. 10** shows two remote devices communicating over a communication network in accordance with an embodiment of the disclosure.

## 5. Detailed description of preferred embodiments of the disclosure.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims. Like numbers refer to like elements throughout the description of the figures.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

The disclosure is described for encoding/decoding a frame but extends to the encoding/decoding of a sequence of frames (video) because each frame of the sequence is sequentially encoded/decoded as described below.

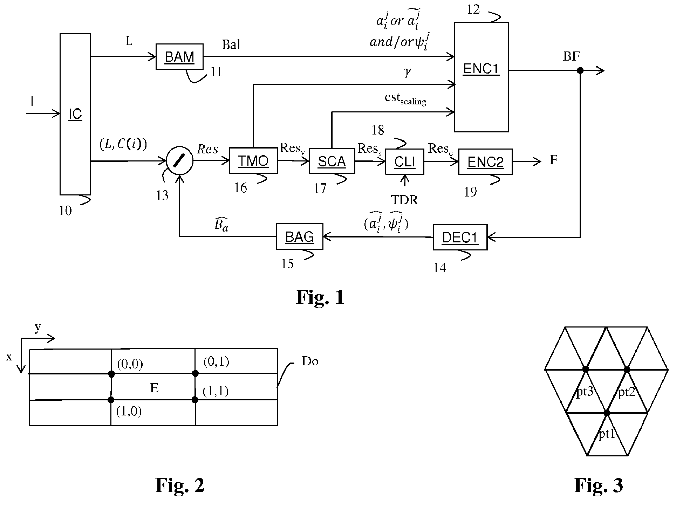

**Fig. 1** shows a block diagram of the steps of a method for encoding a frame I in accordance with an embodiment of the disclosure.

In step 10, a module IC obtains the luminance component L and potentially at least one color component C(i) of the frame I to be encoded.

For example, when the frame I belongs to the color space (X,Y,Z), the luminance component L is obtained by a transform f(.) of the component Y, e.g. L=f(Y).

When the frame I belongs to the color space (R,G,B), the luminance component L is obtained, for instance in the 709 gamut, by a linear combination which is given by:

$$L=0.2127.R+0.7152.G+0.0722.B$$

In step 11, a module BAM determines a backlight frame Bal from the luminance component L of the frame I.

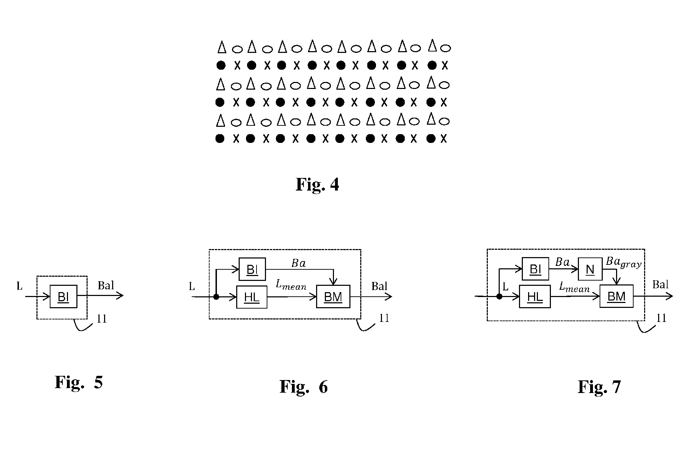

According to an embodiment of the step 11, illustrated in **Fig. 5,** a module BI determines a backlight frame Ba as being represented by a weighted linear combination of at least one set of 2D shape functions.

Mathematically speaking, the backlight frame Ba is given by

$$Ba = \sum_j \sum_i \ a_i^j \psi_i^j \qquad (1)$$

with $a_i^j$ being weighting coefficients, $\left\{ \psi_i^j \right\}_i$ the 2D shape functions of a set j of 2D shape functions.

The 2D shape functions of each set j form a partition of unity of a domain Do defined by the union of their supports, i.e, by definition, the 2D shape functions $\psi_i^j$ have compact supports and their sum over the domain Do equals 1:

$$\sum_i \psi_i^j = 1$$

According to an embodiment of the step 11, the 2D shape functions are defined over a regular grid.

As a variant of this embodiment, a rectangular grid is considered by using multiplicative stretching in the two directions of the square grid.

According to an embodiment of the step 11, illustrated in **Fig. 2,** the 2D shape functions $\psi_i^j$ are obtained as follows.

Assuming the centers (0,0), (0,1), (1,0) and (1,1) of the 2D shape functions $\psi_1^j$, $\psi_2^j$, $\psi_3^j$ and $\psi_4^j$ respectively, are on a regular grid (here rectangular grid), each of these four 2D shape functions has its support contained in the four grid elements around its centers. The domain Do is thus defined by the union of the four grid elements around the center of each 2D shape functions. The partition of unity condition on the domain Do is then given by:

$$\psi_1 + \psi_2 + \psi_3 + \psi_4 = 1$$

According to an embodiment of the step 11, the 2D shape functions of a set j are the translated functions of a model symmetric function $\phi$, i.e. $\phi(x, y) = \phi(\pm x, \pm y)$. In this case, the partition of unity condition on the domain Do is then given by:

$$\phi(x,y) + \phi(1-x,y) + \phi(x,1-y) + \phi(1-x,1-y) = 1$$

on any of one grid element E as depicted on **Fig. 2.**

According to an embodiment of the step 11, the model symmetric function $\phi$ is the product of two separable 1D (one dimensional) polynomials P(x) and P(y), i.e. $\phi(x,y) = P(x)P(y)$.

When P fulfills the partition of unity condition, i.e. P(x) + P(1-x) = 1, the partition of unity condition of the 2D shape function is fulfilled because one gets

$$P(x)P(y) + P(1-x)P(y) + P(x)P(1-y) + P(1-x)P(1-y)$$
$$= \big(P(x) + P(1-x)\big)\big(P(y) + P(1-y)\big) = 1$$

According to an embodiment of the step 11, the 2D shape functions $\psi_i^j$ are defined according to constraints of smoothness on the boundaries of their supports.

This allows continuity of the 2D shape functions over the frame domain and smoothness of the global representation of the backlight frame Ba, because a finite sum of smooth functions is smooth.

According to an embodiment of the step 11, the constraints on the boundaries of the 2D shape functions are:

- a boundary constraint P(0) = 1, which means that only one 2D shape function contributes at its center;
- a constraint relative to the continuity and the continuity of the derivative at the boundary of the support of the 2D shape function: P(1) = P'(1) = 0;
- a constraint of the derivative at the center: P'(0) = 0 to ensure smoothness around the center.

One may look for analytical solutions for the 1D polynomial P with the above four boundary constraints.

For example, a solution for the 1D function P is a polynomial of degree three given by $P(x) = \theta x^3 + \vartheta x^2 + \kappa x +$

$\lambda$. The above constraints lead to the following conditions on the parameters

- $1 = P(0) = \lambda$
- $0 = P(1) = \theta + \vartheta + \kappa + \lambda$
- $0 = P'(1) = 3\theta + 2\vartheta + \kappa$
- $0 = P'(0) = \kappa$

One easily solves this linear system of equations to obtain $\theta = 2, \vartheta = -3, \kappa = 0, \lambda = 1$, and the model symmetric function $\phi(x,y)$ is then given by:

$$\phi(x,y) = (2x^3 - 3x^2 + 1)\ (2y^3 - 3y^2 + 1).$$

Other polynomial examples are obtained by relaxing some smoothness. For instance, by requiring the continuity only, one notices that P(x) = 1-x is a continuous solutions leading to a partition of unity with the following model symmetric function

$$\phi(x,y) = (1-x)\ (1-y).$$

whose derivative is not continuous.

Also, one may look for higher order parametric polynomial. For instance, the four conditions above when applied to a forth order polynomial $P(x) = \mu x^3 + \theta x^3 + \vartheta x^2 + \kappa x + \lambda$ lead to an under-constrained linear system whose solutions are parameterized by one parameter $\alpha$, thus leading to an infinity of polynomial solutions $P_\alpha$.

One way to decide which solution is the best is to choose the parameter $\alpha$ such that the Laplace operator is minimized, i.e.

$$P = \mathrm{argmin}_{P_\alpha} \|\Delta P_\alpha\|.$$

Finally, non-analytical purely numerical solutions can be obtained from the resolution of the following minimization problem on P

$$\mathrm{minimize}\ \|\Delta P\|\ \mathrm{such\ that}\ \begin{cases} 0 = P(1) = P'(1) = P'(0) \\ 1 = P(0) \end{cases}$$

where P is understood not necessarily being a polynomial but any smooth enough function, for instance of class $C^1$. The numerical resolution of the minimization problem will be detailed later in the two-dimensional non-symmetric case.

**Fig. 3** show an example of the model symmetric function $\phi$ when the regular grid is a triangular meshing.

Assuming the centers pt1=(0,0), pt2=(-1/3,sqrt(3)/2) and pt3=(1/3,sqrt(3)/2) of the 2D shape functions $\psi_1, \psi_2$ and $\psi_3$ respectively, on the triangular meshing, each of the three 2D shape functions has its support contained in the six triangles around its center **(Fig. 3)**. The domain DO is thus defined here by the union of the six triangles around the center of each 2D shape function. The partition of unity condition on Do is then given by:

$$\psi_1 + \psi_2 + \psi_3 = 1 \quad (2)$$

According to an embodiment of the step 11, the 2D shape functions have the shape of a model symmetric function $\phi$ whose the support is a single triangle.

The representation on a support of a 2D shape function (here six triangles around its center) of the backlight frame Ba which respects the partition of unity condition is then obtained when the model symmetric function $\phi$ is defined on a single triangle.

According to an embodiment of the step 11, the model symmetric function $\phi$ whose the support is a triangle is defined to constraints on its boundaries.

This allows continuity of the 2D shape functions over the frame domain and smoothness of the global representation of the backlight frame Ba.

According to an embodiment of the step 11, the constraints on the boundaries of the model symmetric function $\phi$ are:

$$\begin{cases} \phi_{|d_1} = 0 \\ \partial_n \phi_{|d_1} = 0 \\ \partial_n \phi_{|d_2} = 0 \\ \partial_n \phi_{|d_3} = 0 \end{cases} \quad (3)$$

Finally, the model symmetric function $\phi$ is determined by solving the minimization problem

$$\text{minimize } \|\Delta\phi\| \quad \text{such that conditions (2) and (3) are fulfilled}$$

in order to maximize the smoothness of the solution.

Numerical solutions are standardly found by discretization of the domain Do and then minimization under constrains on the boundary and partition of unity. One may refer to the book «Introduction à l'analyse numérique des équations aux dérivées partielles» by Raviart & Thomas for the introduction to the involved numerical tools.

In brief, one generates a mesh on the domain Do and the model symmetric function $\phi$ takes one discrete value on each mesh. These discrete values can be summed up into an unknown vector x. The Laplace operator is itself discretized under a matrix M such that the operator $\Delta\phi$ become Mx in its discrete form. The conditions (2) and (3) are put a matrix system Cx = 0. Thus, the minimization problem becomes

$$\text{minimize } \|Mx\| \quad \text{such that } Cx = 0$$

This is a classical linear least square minimization problem under constraint. There exist many solver to find the solution x leading to a discrete approximation of the wanted solution $\phi$. See Gill, P.E., W. Murray, and M.H. Wright, Practical Optimization, Academic Press, London, UK, 1981.

According to an embodiment of the step 11, the backlight frame is represented by a weighted linear combination of several sets of 2D shape functions, the 2D shape functions of each set forming a partition of unity of a domain defined by the union of their supports.

**Fig. 4** shows an example of a representation using four sets of 2D shape functions defined over a rectangular grid. The black circles represent the centers of the 2D shape functions of a first set, the triangles the centers of a second one, the ovals the centers of a third one and the crosses the centers of a forth one.

The sum of all the 2D shape functions of all the sets is constant everywhere on the grid, with value 4 here. So one gets a partition of unity, up to a multiplicative factor. The key point here is that the 2D shape functions overlap much more than on the example using only a single set of 2D shape functions as described in relation with **Fig. 2 and 3.** By using several set of 2D shape functions, it is possible to get even more overlapping and to use 2D shape functions with closer centers, i.e. a higher density of shape functions to follow the HDR signal smoothly while remaining precise.

The disclosure is not limited to a specific number of sets of 2D shape functions nor to the way to combine them together on a mesh nor the kind of mesh used to locate the centers of the 2D shape functions.

According to one of the embodiments or variants of the step 11, the backlight frame Bal, output from step 11, is the backlight frame Ba given by equation (1).

According to an embodiment of the step 11, illustrated in **Fig. 6,** a module BM modulates the backlight frame Ba (given by equation (1)) with a mean luminance value $L_{mean}$ of the frame I obtained by the means of a module HL.

According to this embodiment, the backlight frame Bal, output from step 11, is the modulated backlight frame.

According to an embodiment, the module HL is configured to calculate the mean luminance value $L_{mean}$ over the whole luminance component L.

According to an embodiment, the module HL is configured to calculate the mean luminance value $L_{mean}$ by

$$L_{mean} = E\left(L^{\beta}\right)^{\frac{1}{\beta}}$$

with $\beta$ being a coefficient less than 1 and E(X) the mathematical expectation value (mean) of the luminance component L.

This last embodiment is advantageous because it avoids that the mean luminance value $L_{mean}$ be influenced by a few pixels with extreme high values which usually leads to very annoying temporal mean brightness instability when the frame I belongs to a sequence of frames.

The disclosure is not limited to a specific embodiment for calculating the mean luminance value $L_{mean}$.

According to a variant of this embodiment, illustrated in **Fig. 7,** a module N normalizes the backlight frame Ba (given by equation (1)) by its mean value E(Ba) such that one gets a mid-gray-at-one backlight frame $Ba_{gray}$ for the frame (or for all frames if the frame I belongs to a sequence of frames):

$$Ba_{gray} = \frac{Ba}{E(Ba)}$$

Then, the module BM is configured to modulate the mid-gray-at-one backlight frame $Ba_{gray}$ with the mean luminance value $L_{mean}$ of the frame L, by using the following relation

$$Ba_{mod} \approx cst_{mod}.L_{mean}{}^{\alpha}.Ba_{gray} \quad (4)$$

with $cst_{mod}$ being a modulation coefficient and $\alpha$ being another modulation coefficient less than 1, typically 1/3.

According to this variant, the backlight frame Bal, output from step 11, is the modulated backlight frame $Ba_{mod}$ given by equation (4).

It may be noted that the modulation coefficient $cst_{mod}$ is tuned to get a good looking brightness for the residual frame and highly depends on the process to obtain the backlight frame. For example, $cst_{mod} \approx 1.7$ for a backlight frame obtained by least means squares.

Practically, by linearity, all operations to modulate the backlight frame apply to the backlight coefficients $a_i^j$ as a correcting factor which transforms the coefficients $a_i^j$ into new coefficients $\widetilde{a_i^j}$ such that one gets

$$Ba_{mod} = \sum_j \sum_i \widetilde{a_i^j} \psi_i^j$$

In step 12 **(Fig. 1**), the data needed to determine the backlight frame Bal, output from step 11, are encoded by means of an encoder ENC1 and added in a bitstream BF which may be stored on a local or remote memory and/or transmitted through a communication interface (e.g. to a bus or over a communication network or a broadcast network).

For example, the data to be encoded are limited to the weighting coefficients $a_i^j$ or $\widetilde{a_i^j}$ when known non-adaptive shape functions are used, but the 2D shape functions $\psi_i^j$ may also be a priori unknown and then encoded in the bitstream BF, for instance in a case of a somewhat optimal mathematical construction for better fitting. So, all the weighting coefficients $a_i^j$ or $\widetilde{a_i^j}$ (and potentially shape functions $\psi_i^j$) are encoded in the bitstream BF.

Advantageously, the weighting coefficients $a_i^j$ or $\widetilde{a_i^j}$ are quantized before encoded in order to reduce the size of the bitstream BF.

In step 13, a residual frame Res is calculated by dividing the frame by a decoded version $\widetilde{Ba}$ of the backlight frame.

It is advantageous to use the decoded version $\widehat{Ba}$ of the backlight frame to ensure a same backlight frame on both encoder and decoder side, thus leading to a better precision of a final decoded frame $\hat{I}$.

More precisely, the luminance component L and potentially each colour component C(i) of the frame I, obtained from the module IC, is divided by the decoded version $\widehat{Ba}$ of the backlight frame. This division is done pixel per pixel.

For example, when the components R, G or B of the frame I are expressed in the color space (R,G,B), the component $R_{Res}$, $G_{Res}$ and $B_{Res}$ are obtained as follows:

$$R_{res} = R/\widehat{Ba}, \quad G_{res} = G/\widehat{Ba}, \quad B_{res} = B/\widehat{Ba},$$

For example, when the components X, Y or Z of the frame I are expressed in the color space (Y,Y,Z), the component $X_{Res}$, $Y_{Res}$ and $Z_{Res}$ are obtained as follows:

$$X_{res} = X/\widehat{Ba} \quad Y_{res} = Y/\widehat{Ba} \quad Z_{res} = Z/\widehat{Ba}$$

According to an embodiment, in step 14, the decoded version $\widehat{Ba}$ of the backlight frame is obtained by decoding at least partially the bitstream BF by means of a decoder DEC1.

As explained before, some data needed to obtain the backlight frame, output of step 11, have been encoded (step 12) and then obtained by at least partially decoding the bitstream BF.

Following the example given above, weighting coefficients $\widehat{a_i^j}$ (and potentially shape functions $\widehat{\psi_i^j}$) are then obtained as output of step 14.

Then, in step 15, a module BAG generates a decoded version $\widehat{Ba}$ of the backlight frame from the weighting coefficients $\widehat{a_i^j}$ and either some known non-adaptive shape functions or the shape functions $\widehat{\psi_i^j}$ by:

$$\widehat{Ba} = \sum_j \sum_i \widehat{a_i^j} \, \widehat{\psi_i^j}$$

In step 16, a module TMO tone-maps the residual frame Res in order to get a viewable residual frame $Res_v$.

It may appear that the residual frame Res may not be viewable because its dynamic range is too high and because a decoded version of this residual frame Res shows too visible artifacts. Tone-mapping the residual frame remedies to at least one of these drawbacks.

The disclosure is not limited to any specific tone-mapping operator. This single condition is that the tone-mapping operator shall be reversible.

For example, the tone-mapping operator defined by Reinhard may be used (Reinhard, E., Stark, M., Shirley, P., and Ferwerda, J., \Photographic tone reproduction for digital frames,"ACM Transactions on Graphics 21 (July 2002)), or Boitard, R., Bouatouch, K., Cozot, R., Thoreau, D., & Gruson, A. (2012). Temporal coherency for video tone mapping. In A. M. J. van Eijk, C. C. Davis, S. M. Hammel, & A. K. Majumdar (Eds.), Proc. SPIE 8499, Applications of Digital Frame Processing (p. 84990D-84990D-10)).

In step 19, the viewable residual frame $Res_v$ is encoded by means of an encoder ENC2 in a bitstream F which may be stored on a local or remote memory and/or transmitted through a communication interface (e.g. on a bus or over a communication network or a broadcast network).

According to an embodiment of the step 16, tone mapping the residual frame comprises either a gamma correction or a SLog correction according to the pixel values of the residual frame.

The viewable residual frame $Res_v$ is then given, for example, by:

$$Res_v = A.Res^\gamma$$

with A being a constant value, $\gamma$ being a coefficient of a gamma curve equal, for example, to 1/2.4.

Alternatively, the viewable residual frame $Res_v$ is given, for example, by:

$$Res_v = a.\ln(Res + b) + c$$

with a,b and c being coefficients of a SLog curve determined such that 0 and 1 are invariant, and the derivative of the SLog curve is continuous in 1 when prolonged by a gamma curve below 1. Thus, a,b and c are functions of the parameter $\gamma$.

According to an embodiment, the parameter $\gamma$ of the gamma-Slog curve is encoded in the bitstream BF.

Applying a gamma correction on the residual frame Res, pulls up the dark regions but does not lower enough high lights to avoid burning of bright pixels.

Applying a SLog correction on the residual frame Res lowers enough high lights but does not pull up the dark regions.

Then, according to a preferred embodiment of the step 16, the module TMO applies either the gamma correction or the SLog correction according to the pixel values of the residual frame Res.

For example, when the pixel value of the residual frame Res is below a threshold (equal to 1), then the gamma correction is applied and otherwise the SLog correction is applied.

By construction, the viewable residual frame $Res_v$ usually has a mean value more or less close to 1 depending on the brightness of the frame I, making the use of the above gamma-Slog combination particularly efficient.

According to an embodiment of the method, in step 17, a module SCA scales the viewable residual frame $Res_v$ before encoding (step 19) by multiplying each component of the viewable residual frame $Res_v$ by a scaling factor $cst_{scaling}$. The resulting residual frame $Res_s$ is then given by

$$Res_s = cst_{scaling}.Res_v$$

In a specific embodiment, the scaling factor $cst_{scaling}$ is defined to map the values of the viewable residual frame $Res_v$ between from 0 to the maximum value $2^N-1$, where N is the number of bits allowed as input for the coding by the encoder ENC2.

This is naturally obtained by mapping the value 1 (which is roughly the mean value of the viewable residual frame $Res_v$) to the mid-gray value $2^{N-1}$. Thus, for a viewable residual frame $Res_v$ with a standard number of bits N=8, a scaling factor equal to 120 is a very consistent value because very closed to the neutral gray at $2^7=128$.

According to this embodiment of the method, in step 19, the residual frame $Res_s$ is encoded by means of an encoder ENC2.

According to an embodiment of the method, in step 18, a module CLI clips the viewable residual frame $Res_v$ before encoding to limit its dynamic range to a targeted dynamic range TDR which is defined, for example, according to the capabilities of the encoder ENC2.

According to this last embodiment, the resulting residual frame $Res_c$ is given, for example, by:

$$Res_c = max(2^N, Res_v)$$

$$Res_c = max(2^N, Res_s)$$

according to the embodiments of the method.

The disclosure is not limited to such clipping (max(.)) but extends to any kind of clipping.

According to this embodiment of the method, in step 19, the residual frame $Res_c$ is encoded by means of an encoder ENC2.

Combining the scaling and clipping embodiments leads to a residual frame $Res_{sc}$ given by:

$$\text{Res}_{sc} = \max(2^N, \text{cst}_{scaling} * \text{Res}_v)$$

or by

$$\text{Res}_{sc} = \max(2^N, \text{cst}_{scaling} * \text{Res}_s)$$

according to the embodiments of the method.

According to this embodiment of the method, in step 19, the residual frame $\text{Res}_{sc}$ is encoded by means of an encoder ENC2.

The tone-mapping and scaling of the viewable residual frame $\text{Res}_v$ is a parametric process. The parameters may be fixed or not and in the latter case they may be encoded in the bitstream BF by means of the encoder ENC1.

According to an embodiment of the method, the constant value $\gamma$ of the gamma correction, the scaling factor $\text{cst}_{scaling}$ may be parameters which are encoded in the bitstream BF.

It may be noted that the choice of the parameters $\alpha, \text{cst}_{mod}, \text{cst}_{scaling}, \gamma, \beta$ gives room for the choice of the tone-mapping which suits the content the best following the taste of an expert in post-production and color grading.

On the other hand, universal parameters may be defined in order to be acceptable for all of a large variety of frames. Then, no parameters are encoded in the bitstream BF.

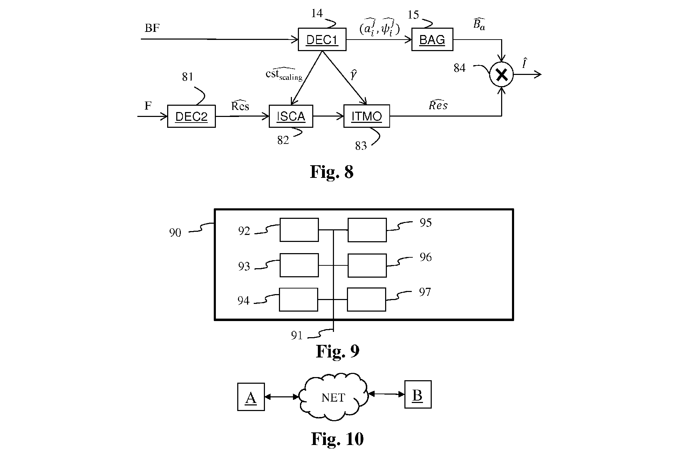

**Fig. 8** shows a block diagram of the steps of a method, in accordance with an embodiment of the disclosure, for decoding a bitstream representing a residual frame calculated by dividing an frame by a backlight frame.

As explained above, in steps 14 and 15, a backlight frame $\widehat{B_a}$ is obtained for example by at least partially decoding a bitstream BF by means of the decoder DEC1.

The bitstream BF may have been stored locally or received from a communication network.

In step 81, a decoded residual frame $\widehat{Res}$ is obtained by a at least partial decoding of a bitstream F by means of a decoder DEC2.

The bitstream F may have been stored locally or received from a communication network.

As explained below, the decoded residual frame $\widehat{Res}$ is viewable by a traditional apparatus.

In step 84, a decoded frame $\hat{l}$ is obtained by multiplying the decoded residual frame $\widehat{Res}$ by the backlight frame $\widehat{B_a}$.

According to an embodiment of step 14, the parameters $\hat{\gamma}$ and/or $\widehat{cst_{scaling}}$ are also obtained either from a local memory or by a at least partial decoding of the bitstream BF by means of the decoder DEC1.

According to the method, in step 82, a module ISCA applied an inverse scaling to the decoded residual frame $\widehat{Res}$ by dividing the decoded residual frame $\widehat{Res}$ by the parameter $\widehat{cst_{scaling}}$.

In step 83, a module ITMO applied an inverse-tone-mapping to the decoded residual frame $\widehat{Res}$, by means of the parameters $\hat{\gamma}$.

For example, the parameter $\hat{\gamma}$ defines a gamma curve and the inverse-tone-mapping is just to find, from the gamma curve, the values which correspond to the pixel values of the decoded residual frame $\widehat{Res}$.

The decoders DEC1, respectively DEC2, is configured to decode data which have been encoded by the encoder ENC1, respectively DEC2.

The encoders ENC1 and ENC2 (and decoders DEC1 and DEC2) are not limited to a specific encoder (decoder) but when an entropy encoder (decoder) is required, an entropy encoder such as a Huffmann coder, an arithmetic coder or a context adaptive coder like Cabac used in h264/AVC or HEVC is advantageous.

The encoders ENC1 and ENC2 (and decoders DEC1 and DEC2) are not limited to a specific encoder which may be, for example, an frame/video coder with loss like JPEG, JPEG2000, MPEG2, h264/AVC or HEVC.

On **Fig. 1-8,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively «Application Specific Integrated Circuit », « Field-Programmable Gate Array », « Very Large Scale Integration », or from several integrated electronic components embedded in a device or from a blend of hardware and software components.

**Fig. 9** represents an exemplary architecture of a device 90 which may be configured to implement a method described in relation with **Fig. 1-8.**

Device 90 comprises following elements that are linked together by a data and address bus 91:

- a microprocessor 92 (or CPU), which is, for example, a DSP (or Digital Signal Processor);
- a ROM (or Read Only Memory) 93;
- a RAM (or Random Access Memory) 94;
- an I/O interface 95 for reception of data to transmit, from an application; and
- a battery 96

According to a variant, the battery 96 is external to the device. Each of these elements of **Fig. 9** are well-known by those skilled in the art and won't be disclosed further. In each of mentioned memory, the word « register » used in the specification can correspond to area of small capacity (some bits) or to very large area (e.g. a whole program or large amount of received or decoded data). ROM 93 comprises at least a program and parameters. Algorithm of the methods according to the disclosure is stored in the ROM 93. When switched on, the CPU 92 uploads the program in the RAM and executes the corresponding instructions.

RAM 94 comprises, in a register, the program executed by the CPU 92 and uploaded after switch on of the device 90, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of encoding or encoder, the frame I is obtained from a source. For example, the source belongs to a set comprising:

- a local memory (93 or 94), e.g. a video memory or a RAM (or Random Access Memory), a flash memory, a ROM (or Read Only Memory), a hard disk ;
- a storage interface (95), e.g. an interface with a mass storage, a RAM, a flash memory, a ROM, an optical disc or a magnetic support;
- a communication interface (95), e.g. a wireline interface (for example a bus interface, a wide area network interface, a local area network interface) or a wireless interface (such as a IEEE 802.11 interface or a Bluetooth® interface); and
- an frame capturing circuit (e.g. a sensor such as, for example, a CCD (or Charge-Coupled Device) or CMOS (or Complementary Metal-Oxide-Semiconductor)).

According to different embodiments of the decoding or decoder, the decoded frame I is sent to a destination; specifically, the destination belongs to a set comprising:

- a local memory (93 or 94), e.g. a video memory or a RAM, a flash memory, a hard disk ;
- a storage interface (95), e.g. an interface with a mass storage, a RAM, a flash memory, a ROM, an optical disc or a magnetic support;
- a communication interface (95), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface); and
- a display.

According to different embodiments of encoding or encoder, the bitstream BF and/or F are sent to a destination. As an example, one of bitstream F and BF or both bitstreams F and BF are stored in a local or remote memory, e.g. a video memory (94) or a RAM (94), a hard disk (93). In a variant, one or both bitstreams are sent to a storage interface (65), e.g. an interface with a mass storage, a flash memory, ROM, an optical disc or a magnetic support and/or transmitted over a communication interface (95), e.g. an interface to a point to point link, a communication bus, a point to multipoint link or a broadcast network.

According to different embodiments of decoding or decoder, the bitstream BF and/or F is obtained from a source. Exemplarily, the bitstream is read from a local memory, e.g. a video memory (94), a RAM (94), a ROM (93), a flash memory (93) or a hard disk (93). In a variant, the bitstream is received from a storage interface (95), e.g. an interface with a mass storage, a RAM, a ROM, a flash memory, an optical disc or a magnetic support and/or received from a communication interface (95), e.g. an interface to a point to point link, a bus, a point to multipoint link or a broadcast network.

According to different embodiments, device 90 being configured to implement an encoding method described in relation with **Fig. 1-7,** belongs to a set comprising:

- a mobile device ;
- a communication device ;
- a game device ;
- a tablet (or tablet computer) ;
- a laptop ;
- a still frame camera;
- a video camera ;
- an encoding chip;
- a still frame server ; and
- a video server (e.g. a broadcast server, a video-on-demand server or a web server).

According to different embodiments, device 90 being configured to implement a decoding method described in relation with **Fig. 8,** belongs to a set comprising:

- a mobile device ;
- a communication device ;
- a game device ;
- a set top box;
- a TV set;
- a tablet (or tablet computer) ;
- a laptop ;
- a display and
- a decoding chip.

According to an embodiment illustrated in **Fig. 10,** in a transmission context between two remote devices A and B over a communication network NET, the device A comprises means which are configured to implement a method for encoding an frame as described in relation with the **Fig. 1** and the device B comprises means which are configured to implement a method for decoding as described in relation with **Fig. 8.**

According to a variant of the disclosure, the network is a broadcast network, adapted to broadcast still frames or video frames from device A to decoding devices including the device B.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. Method for encoding a frame, comprising a processor configured for:

- encoding (12) a backlight frame determined (11) from the frame to be encoded;
- obtaining (13) at least one component of a residual frame by dividing each component of the frame by a decoded version of the backlight frame;
- encoding (19) the residual frame;

the method is **characterized in that** the processor is further configured in order that the backlight frame is represented by a weighted linear combination of at least one set of 2D shape functions, the 2D shape functions of each set forming a partition of unity of a domain defined by the union of their supports.

2. Device for encoding a frame, comprising a processor configured for:

- encoding (12) a backlight frame determined (11) from the frame to be encoded;
- obtaining (13) at least one component of a residual frame by dividing each component of the frame by a decoded version of the backlight frame;
- encoding (19) the residual frame;

the device is **characterized in that** the processor is further configured in order that the backlight frame is represented by a weighted linear combination of at least one set of 2D shape functions, the 2D shape functions of each set forming a partition of unity of a domain defined by the union of their supports.

3. The method according to the claim 1 or the device according to the claim 2, wherein coefficients of the weighted linear combination and/or the 2D shape functions are encoded in a bitstream.

4. Method for decoding a frame from at least one bitstream representing a backlight frame obtained from the frame and a residual frame calculated by dividing the frame by the backlight frame, the method comprising a processor configured for:

- obtaining (14) a decoded backlight frame by a at least partially decoding of a bitstream;
- obtaining a decoded residual frame by a at least partially decoding of a bitstream; and
- obtaining (51) a decoded frame by multiplying the decoded residual frame by the decoded backlight frame;

**characterized in that** the processor is further configured in order that the decoded backlight frame is represented by a weighted linear combination of at least one set of 2D shape functions, the 2D shape functions of each set forming a partition of unity of a domain defined by the union of their supports.

5. Device for decoding a frame from at least one bitstream representing a backlight frame obtained from the frame and a residual frame calculated by dividing the frame by the backlight frame, the device comprising a processor configured for:

- obtaining (14) a decoded backlight frame by a at least partially decoding of a bitstream;
- obtaining a decoded residual frame by a at least partially decoding of a bitstream; and
- obtaining (51) a decoded frame by multiplying the decoded residual frame by the decoded backlight frame;

**characterized in that** the processor is further configured in order that the decoded backlight frame is represented by a weighted linear combination of at least one set of 2D shape functions, the 2D shape functions of each set forming a partition of unity of a domain defined by the union of their supports.

**6.** The method according to the claim 4 or the device according to the claim 5, wherein the processor is further configured for obtaining coefficients of the weighted linear combination of 2D shape functions by a at least partially decoding of a bitstream and/or the 2D shape functions of a set of 2D shape functions by a at least partially decoding of a bitstream.

**7.** The method according to the claim 1, 3-4, 6 or the device according to the claim 2 or 5, wherein the 2D shape functions are defined according to constraints of smoothness on the boundaries of their supports.

**8.** The method according to the claim 1, 3-4, 6-7 or the device according to the claim 2 or 5 or 7, wherein the 2D shape functions of a set have the shape of a model symmetric function.

**9.** The method according to the claim 1, 3-4, 6-8 or the device according to the claim 2 or 5 or 7-8, wherein the 2D shape functions are defined over a regular grid.

**10.** The method according to the claim 1, 3-4, 6-9 or the device according to the claim 2 or 5 or 7-9, wherein the model symmetric function is the product of two separable 1D polynomials.

**11.** A computer program product comprising program code instructions to execute the steps of the encoding method according to one of the claims 1, 3, 6-10 when this program is executed on a computer.

**12.** A computer program product comprising program code instructions to execute the steps of the decoding method according to one of the claims 4, 6-10 when this program is executed on a computer.

**13.** A processor readable medium having stored therein instructions for causing a processor to perform at least the steps of the encoding method according to one of the claims 1, 3, 6-10.

**14.** A processor readable medium having stored therein instructions for causing a processor to perform at least the steps of the decoding method according to one of the claims 4, 6-10.

**17.** Non-transitory storage medium carrying instructions of program code for executing steps of the method according to one of claims 1, 3-4, 6-10 when said program is executed on a computing device.

**Fig. 1**

**Fig. 2**

**Fig. 3**

Fig. 4

Fig. 5

Fig. 6

Fig. 7

**Fig. 8**

**Fig. 9**

**Fig. 10**

Europäisches
Patentamt

European
Patent Office

Office européen
des brevets

# EUROPEAN SEARCH REPORT

Application Number

EP 14 30 5729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LASSERRE S ET AL: "High Dynamic Range video coding", 16. JCT-VC MEETING; 9-1-2014 - 17-1-2014; SAN JOSE; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-P0159, 5 January 2014 (2014-01-05), XP030115677, * page 4 - page 6 * | 1-17 | INV. H04N19/33 |
| Y | Melenk: "The Partition of Unity Finite Element Method: Basic Theory and Applications", Computer method in applied mechanics and engineering, 15 December 1996 (1996-12-15), pages 1-31, XP055142971, Retrieved from the Internet: URL:ftp://ftp.sam.math.ethz.ch/hg/pub/sam-reports/reports/reports96/96-01.pdf [retrieved on 2014-09-26] * the whole document * | 1-17 | |
| A | YI-LING CHEN ET AL: "A Partition-of-Unity Based Algorithm for Implicit Surface Reconstruction Using Belief Propagation", SHAPE MODELING AND APPLICATIONS, 2007. SMI '07. IEEE INTERNATIONAL CON FERENCE ON, IEEE, PI, 1 June 2007 (2007-06-01), pages 147-155, XP031116742, ISBN: 978-0-7695-2815-1 * the whole document * | 1-17 | |

TECHNICAL FIELDS SEARCHED (IPC)

H04N

-/--

The present search report has been drawn up for all claims

| Place of search | Date of completion of the search | Examiner |
|---|---|---|
| Berlin | 29 September 2014 | Raeymaekers, Peter |

EPO FORM 1503 03.82 (P04C01)

Europäisches
Patentamt

European
Patent Office

Office européen
des brevets

# EUROPEAN SEARCH REPORT

Application Number

EP 14 30 5729

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XIAOJUN WU ET AL: "Implicit Fitting and Smoothing Using Radial Basis Functions with Partition of Unity", COMPUTER AIDED DESIGN AND COMPUTER GRAPHICS, 2005. NINTH INTERNATIONAL CONFERENCE ON HONG KONG, CHINA 07-10 DEC. 2005, PISCATAWAY, NJ, USA,IEEE, 7 December 2005 (2005-12-07), pages 139-148, XP010900909, DOI: 10.1109/CAD-CG.2005.50 ISBN: 978-0-7695-2473-3 * the whole document * | 1-17 | |
| A | TOUZE DAVID ET AL: "High dynamic range video distribution using existing video codecs", 2013 PICTURE CODING SYMPOSIUM (PCS), IEEE, 8 December 2013 (2013-12-08), pages 349-352, XP032566992, DOI: 10.1109/PCS.2013.6737755 [retrieved on 2014-02-11] * the whole document * | 1-17 | |

TECHNICAL FIELDS
SEARCHED      (IPC)

The present search report has been drawn up for all claims

| Place of search | Date of completion of the search | Examiner |
|---|---|---|
| Berlin | 29 September 2014 | Raeymaekers, Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Advanced video coding for generic audiovisual Services. *SERIES H: AUDIOVISUAL AND MULTIMEDIA SYSTEMS, Recommendation ITU-T H.264, Telecommunication Standardization Sector of ITU,* January 2012
- High Efficiency Video Coding. *SERIES H: AUDIOVISUAL AND MULTIMEDIA SYSTEMS, Recommendation ITU-T H.265, Telecommunication Standardization Sector of ITU,* April 2013
- **GILL, P.E. ; W. MURRAY ; M.H. WRIGHT.** Practical Optimization. Academic Press, 1981

- **REINHARD, E. ; STARK, M. ; SHIRLEY, P. ; FERWERDA, J.** Photographic tone reproduction for digital frames. *ACM Transactions on Graphics,* July 2002, vol. 21
- Temporal coherency for video tone mapping. **BOITARD, R. ; BOUATOUCH, K. ; COZOT, R. ; THOREAU, D. ; GRUSON, A.** Proc. SPIE 8499, Applications of Digital Frame Processing. 2012, 84990D-84990D, 10